Europäisches Patentamt

European Patent Office

Office européen des brevets

(11) Veröffentlichungsnummer: **0 013 533**
**A2**

# (12) EUROPÄISCHE PATENTANMELDUNG

(21) Anmeldenummer: **79710013.8**

(22) Anmeldetag: **07.12.79**

(51) Int. Cl.³: **B 29 C 27/02**

(30) Priorität: **07.12.78 DE 2852885**
**03.03.79 DE 2908411**

(43) Veröffentlichungstag der Anmeldung:
**23.07.80 Patentblatt 80/15**

(84) Benannte Vertragsstaaten:
**FR GB IT**

(71) Anmelder: **Wagner, Jörg, Dipl.-Ing.**
**Ringstrasse 111**
**D-7750 Konstanz-Dettingen(DE)**

(71) Anmelder: **Fuchslocher, Herbert**
**Mühlbachweg 7b**
**D-7750 Konst.-Dingelsdorf(DE)**

(71) Anmelder: **Dippel, Hans-Jürgen**
**Schlosstrasse**
**D-7763 Öhningen-Kattenhorn(DE)**

(72) Erfinder: **Wagner, Jörg, Dipl.-Ing.**
**Ringstrasse 111**
**D-7750 Konstanz-Dettingen(DE)**

(72) Erfinder: **Fuchslocher, Herbert**
**Mühlbachweg 7b**
**D-7750 Konst.-Dingelsdorf(DE)**

(72) Erfinder: **Dippel, Hans-Jürgen**
**Schlosstrasse**
**D-7763 Öhningen-Kattenhorn(DE)**

(74) Vertreter: **Hiebsch, Gerhard F.,Dipl.-Ing.**
**Postfach 464 Erzberger Strasse 5A**
**D-7700 Singen(DE)**

(54) **Vorrichtung zum Verschweissen von Werkstoffbahnen sowie Schweissverfahren dazu.**

(57) Eine Vorrichtung zum hochfrequenten Verschweißen von Werkstoffbahnen zwischen zwei Elektroden, welche beidseits der Werkstoffbahnen anzuordnen sind, insbesondere an einem die Werkstoffbahnen tragenden Tisch verfahrbare Schweißvorrichtung, soll so verbessert werden, daß sie universal eingesetzt zu werden vermag, also in wirtschaftlich vertretbarem Rahmen die Verarbeitung von üblichen Folien und isolierenden Bahnen erlaubt, und dies bei einer Erhöhung der Schweißgeschwindigkeit sowie einer Verbesserung der Schweißnahtqualität.

Hierzu wird vorgeschlagen, wenigstens eine der Elektroden (E,F) mit an der von den durch Gewebebahnen gebildeten Werkstoffbahn erzeugten Ebene abwälzbaren Teilen (20,21,22) auszustatten. Zudem oder stattdessen sollen die Elektroden mit wenigstens einem beidseits der Bewegungsbahn der vier Kunststoffbahnen gebildeten Werkstoffbahnen und zu diesen etwa parallel angebrachten Heizbalkenpaar (30) od. dgl., dessen Heizbalken unter Druck gegeneinander führbar gelagert sind, austauschbar angeordnet sein und die Schweißpresse ein Gehäuse mit einem Durchlaufschlitz für die Kunststoffbahnen aufweisen. Außerdem hat es sich als günstig erwiesen, dem Press- bzw. Schweißbereich eine Einrichtung zum Einbringen von Schweißstiften (50) od. dgl. in die Werkstoffbahnen (3) so vorzuordnen, daß die Schweißstifte wenigstens zwei einander überlappende Werkstoff- oder Gewebebahnen zusammen durchsetzen und am Ende des Schweißbereichs beidseits der miteinander verschweißten Gewebebahnen eine den entstandenen Durchsetzungsdurchbruch abdeckende Schutzschicht bilden, wobei beide Schutzschichten durch einen stiftartigen Hals verbunden sind. Der diesbezügliche erfindungsgemäße Verfahrensschritt besteht darin, die Gewebebahnen vor deren Zusammenschweißen mit den Schweißstiften od. dgl. quer zu den Gewebeflächen zu verbinden und während des Schweißvorgangs durch Verformen eines Teiles des Schweißstiftes eine Schutzschicht zu erschmelzen, die bevorzugt aus dem Werkstoff einer benachbarten Oberflächenschicht der Gewebebahn besteht.

./...

EP 0 013 533 A2

Fig. 6

# DIPL.-ING. GERHARD F. HIEBSCH

## PATENTANWALT

PROFESSIONAL REPRESENTATIVE BEFORE THE EUROPEAN PATENT OFFICE

MANDATAIRE AGRÉÉ PRÈS L'OFFICE EUROPÉEN DES BREVETS

0013533

Dipl.-Ing. Jörg Wagner
Ringstr. 111
7750 Konstanz-Dettingen

Herbert Fuchslocher
Mühlbachweg 7b
7750 Konstanz-Dingelsdorf

Ing. Hans-Jürgen Dippel
Schloßstr.
7763 Öhningen-Kattenhorn

D-7700 SINGEN 1
Erzbergerstr. 5a

Telegr./Cables:
Bodenseepatent
Telex 7 93 850
Telefon (07731) 63075
             63076

Mein Zeichen / My ref./Ma réf : W-124/EPA

I/ke

Datum/Date

Vorrichtung zum Verschweissen von Werkstoffbahnen sowie
Schweissverfahren dazu

Die Erfindung betrifft eine Vorrichtung zum hochfrequenten
Verschweißen von Werkstoffbahnen zwischen zwei Elektroden,
welche beidseits der Werkstoffbahnen anzuordnen sind, insbesondere an einem die Werkstoffbahnen tragenden Tisch verfahrbare Schweißvorrichtung.

Zum Schweißen von Kunststoffbahnen aller Art sind Schweißvorrichtungen bekannt, bei denen beidseits des zu verschweißenden Bereiches Elektroden angeordnet sind, welche ein hochfrequentes Feld aufbauen. Die Elektroden werden taktweise
an die zu verschweißenden Stöße herangeführt und nach dem
Schweißvorgang abgehoben; dann wird die Elektrode am Ende
der so entstandenen Schweißnaht neu angesetzt; es entsteht
ein weiteres Stück der Schweißnaht. Dieses Vorgehen hat mehrere Nachteile; zum einen ist das Anheben, das Aufsetzen und
das erneute Anheben der Elektrode zeitraubend, zum anderen

-2-

entstehen zwischen den einzelnen Schweißnahtabschnitten zumeist störende Absätze. Darüber hinaus sind gekrümmte Schweißnähte stets nur in geraden Abschnitten zu verschweißen, deren Länge von der Elektrodenlänge abhängt.

Außerdem sind zum Schweißen von Kunststoffbahnen aller Art Schweißmaschinen bekannt, bei denen sogenannte Heizbalken -- einander gegenüberliegend -- einen Schweißbereich bilden; sie werden unter hohem Druck gegeneinander geführt und verschweißen dabei thermisch die Bahnen. Als nachteilig hat sich bei derartigen Schweißmaschinen gezeigt, daß sie nur begrenzt eingesetzt werden; übliche Folien werden zwischen einander gegenüberliegenden Elektroden hochfrequent verschweißt.Vorrichtungen hierfür allerdings eignen sich aus naheliegenden Gründen nicht zum Verschweißen von Folien mit isolierendem Werkstoff.

Die Mängel beider Vorrichtungen haben dazu geführt, daß der wirtschaftliche Einsatz der Schweißpressen immer mehr in Frage gestellt werden mußte. Eine Lösung hat man darin gesehen, unterschiedliche Folien in Spezialbetrieben zu verschweißen.

Angesichts dieser Gegebenheiten hat sich der Erfinder das Ziel gesetzt, eine Vorrichtung der eingangs erwähnten Art zu schaffen, welche universal eingesetzt zu werden vermag, welche also in wirtschaftlich vertretbarem Rahmen die Verarbeitung von üblichen Folien und isolierenden Bahnen erlaubt, und dies bei einer Erhöhung der Schweißgeschwindigkeit sowie einer Verbesserung der Schweißnahtqualität.

Zur Lösung dieser Aufgabe führt der Gedanke, eine kontinuierliche Verschweißung durch auf der Gewebebahn abrollende Elektroden zu ermöglichen, wobei auch eine Justierung der Gewebebahnen gerade im Hinblick auf gekrümmte Schweißbereiche vereinfacht wird.

Dazu hat es sich als günstig erwiesen, daß wenigstens eine der Elektroden an der von den Gewebebahnen gebildeten Ebene abwälzbare Teile aufweist, welche bevorzugtermaßen auf die Gewebebahn/en aufsetzbar und durch Kraftspeicher od. dgl. an diese andrückbar ausgebildet sind. Nach einem weiteren Merkmal der Erfindung können die Elektroden aus einem panzerkettenartigen Druckband bestehen oder aber aus Rollen bzw. Walzen. Letztere sind bevorzugtermaßen in mehreren, quer zur Schweißrichtung verlaufenden Reihen und zueinander versetzt angeordnet.

Dank dieser Ausbildung kann nun eine kontinuierliche Naht erzeugt werden, welche keine hinderlichen Absätze aufweist. Außerdem wird eine bessere Anpassung an die wechselnden Materialdicken und die Krümmungsradien der Nähte erreicht; letzteres wird noch dadurch unterstützt, daß die Elektrode erfindungsgemäß sehr kurz gehalten und gegebenenfalls aus mehreren zueinander verschwenkbaren Abschnitten gebildet wird.

Auch liegt es im Rahmen der Erfindung, daß die Elektroden der eingangs erwähnten Vorrichtung mit wenigstens einem Heizbalkenpaar gemäß Anspruch 2 austauschbar angeordnet sind und die Schweißpresse ein Gehäuse mit einem Durchlaufschlitz für die Kunststoffbahnen aufweist. Dabei sollen die Elektroden mit ihren Generatoranschlüssen in der Schweißpresse bewegbar angebracht sein.

Es hat sich in der Praxis gezeigt, daß ein einfaches Umrüsten üblicher thermischer Schweißpressen durch den Einbau der Elektrode/n nicht ausreicht, um Folienbahnen
schweißen zu können. Erst die vorstehenden erfindungsgemäßen Maßgaben führen zu einer Schweißpresse, welche die
gestellte Aufgabe zu lösen vermag.

Dabei hat es sich als besonders günstig erwiesen, Heizbalken
und Elektrode/n um eine Achse drehbar anzuordnen, beispielsweise -- nach einem anderen Merkmal der Erfindung --
an einem drehbar gelagerten Querbalken od. dgl., gegenüber
dem sie schwenkbar und/oder anhebbar bzw. senkbar sind.
Dies erlaubt eine einfache Umstellung sogar während des
Schweißbetriebes. Im Rahmen der Erfindung liegen alle anderen Bauformen, welche ein problemloses und rasches Wechseln
von Heizbalken und Elektroden erlauben.

Vorteilhafterweise soll der Elektrode wenigstens ein Heizorgan vorgeschaltet bzw. den Heizbalken zudem ein Kühlorgan  nachgeordnet werden, welche ihrerseits auf die Gewebebahnen aufsetzbare Rollen oder umlaufende Druckbänder
aufweisen. Um bei Änderung der Fahrtrichtung der verfahrbaren Schweißvorrichtung die Reihenfolge Vorheizung / Elektrode bzw. Vorheizung / Druckbalken / Kühlorgan beibehalten
zu können, hat es sich als günstig erwiesen, die jeweils
einander zugeordneten Aggregate in Fahrtrichtung austauschbar vorzusehen, beispielsweise an einem gemeinsamen
Jochbalken anzubringen.

Im Rahmen der Erfindung und der erfindungsgemäßen Aufgabe,
eine Faltenbildung zu vermeiden und die Ausrichtung der
Gewebebahnen zu vereinfachen, liegt es, daß der Tisch
Spannorgane zur Festlegung der Gewebebahn/en auf der Tischoberfläche besitzt und diese an Halterungen in und gegen

Schweißrichtung und/oder quer dazu ortsveränderlich sind;
hierdurch ist es möglich, die Gewebebahnen bzw. den Überlappungsbereich vor oder während des Schweißvorganges --
auch gekrümmt -- einzurichten, besonders dann, wenn die
als Halterungen dienenden Querbalken und Schlitten angetrieben und steuerbar sind.

Zur Verbesserung der Verbindung beider Werkstoff- oder Gewebebahnen sowie zur Vereinfachung des Schweißverfahrens
wird zudem erfindungsgemäß vorgeschlagen, dem eigentlichen
Preß- bzw. Schweißbereich eine Einrichtung zum Einbringen
von Schweißstiften od. dgl. in die Werkstoff- bzw. Gewebebahnen -- beispielsweise eine Stift- oder Klammerpresse --
so vorzuordnen, daß die Schweißstifte wenigstens zwei
einander überlappende Gewebebahnen zusammen durchsetzen und
am Ende des Schweißbereichs beidseits der miteinander verschweißten Gewebebahnen eine den beim Einbringen entstandenen Durchsetzungsdurchbruch abdeckende Schutzschicht bilden,
wobei beide Schutzschichten durch einen stiftartigen Hals
verbunden sind. Diese Schweißstifte sind -- nach einem weiteren Merkmal der Erfindung -- in der Art von Kragenknöpfen oder Heftklammern ausgebildet,deren spitz endende/r
Hälse bzw. Hals mittels der Einrichtung durch die Gewebebahnen gestoßen wird. So bildet der Hals eine justierende
Querverbindung zwischen den überlappenden Bahnstößen, der
Kopf des "Kragenknopfes" oder der Quersteg der Heftklammer
liegt der einen Gewebebahn an und verdeckt den Durchsetzungsdurchbruch an dessen einer Seite. Der Durchsetzungsdurchbruch wird andererseits durch eine beim eigentlichen Schweißvorgang aus dem Ende des Kunststoffknopfes oder dem Quersteg entstehende Schmelzschicht versiegelt. Diese verbindet
sich innig mit der Gewebebahn bzw. einer auf dieser vorhandenen Deckschicht, die bevorzugt aus dem Werkstoff des Knopfhalses besteht -- vorteilhafterweise aus PVC --
und kann sogar mit der Deckschichtoberfläche fluchten;
eine rauhe Oberfläche, wie sie z. B. bei Nähten auftritt,
wird so verhindert, ebenfalls entfällt der bei den üblichen Nähten vorhandene Mangel der Anfälligkeit gegen
UV-Einwirkungen.

Weitere Vorteile, Merkmale und Einzelheiten der Erfindung
ergeben sich aus der nachfolgenden Beschreibung bevorzugter Ausführungsbeispiele sowie anhand der Zeichnung; diese zeigt in

Fig. 1:   die Draufsicht auf einen Schweißtisch
          mit Schweißpresse;

Fig. 2:   einen Teilschnitt durch Fig. 1 nach deren
          Linie II - II in vergrößerter Wiedergabe;

Fig. 3:   die Draufsicht auf ein Detail einer weiteren Ausführungsform der Schweißpresse;

Fig. 4:   einen skizzenhaften Schnitt durch einen
          Teil einer Schweißpresse in Seitenansicht;

Fig. 5:   ein Detail der Fig. 4 in geänderter Ausführung;

Fig. 6:   einen skizzenhaften Schnitt durch eine andere Schweißpresse;

Fig. 7:   eine schematische Skizze zu einem Herstellungsverfahren.

Auf einem Tisch 1 sind zwischen Querbalken 2 Gewebebahnen
3a, 3b aufgespannt, die sich an ihren Stößen 4 geringfügig
überlappen. Die Querbalken 2 sind in Längsrichtung z des Tisches 1 verfahrbar, während auf den Querbalken 2 Schlitten 5 für Spannorgane 6 in Querrichtung y verlagert werden.
Hierdurch ist ein genaues Einrichten der mittels Klemmen
7 an die Spannorgane 6 angeschlossenen Gewebebahnen 3
auf der Tischoberfläche 8 -- gegebenenfalls über Fernsteuerungspulte 9 -- möglich.

Parallel zur Arbeitskante A des Tisches 1 verlaufen Schienen 10 für eine in Pfeilrichtung Z verfahrbare Schweißpresse
11. Diese übergreift mit einem Firstausleger 12 den Tisch
1 so, daß eine vom Firstausleger 12 am/an Tragarm/en 13
abwärts ragende Elektrode E über der Stoßlinie 4 der Gewebebahnen 3 verläuft. Unterhalb des Tisches 1 ist eine
gesonderte Gegenelektrode F vorgesehen; statt deren kann
auch ein Teil der Vorrichtung selbst die Aufgabe der Gegenelektrode übernehmen. Die elektrischen Anschlüsse der Elektroden sind in der Zeichnung vernachlässigt.

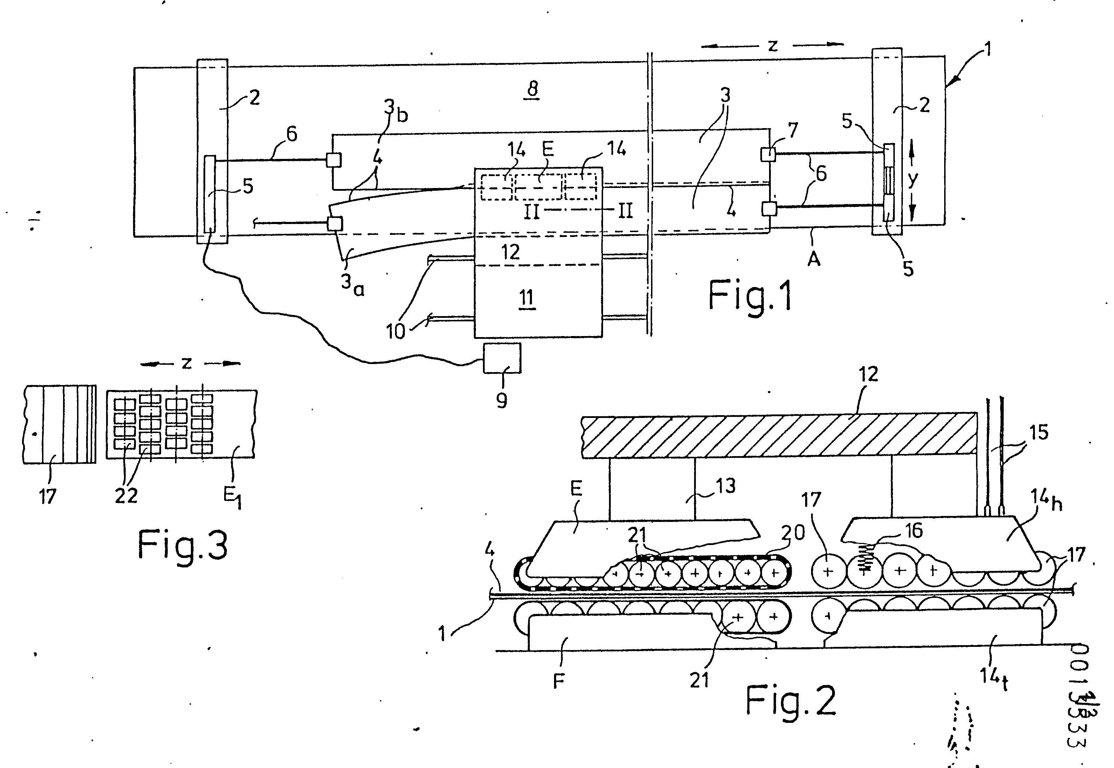

Den Elektroden E, F sind Druck- oder Vorwärmaggregate vor-
und Kühlbalken 14 nachgeschaltet. Die unteren Kühlbalken
sind in Fig. 2 mit $14_t$, die darüber stehenden oberen Kühlbalken mit $14_h$ bezeichnet. Zur Kühlung führen Leitungen 15 Blasluft an die Kühlbalken 14 heran, welche mit -- gegebenenfalls
an Federn 16 aufgehängten -- Kühlwalzen 17 versehen sind.

Die Elektroden E, F sind jeweils mit einem panzerkettenartigen Druckband 20 versehen, welches um Panzerrollen 21 gelegt
ist und über deren Umfang gleitet. Die Panzerrollen 21 können selbst angetrieben oder von dem auf dem Tisch abrollenden Druckband 20 mitgenommen werden.

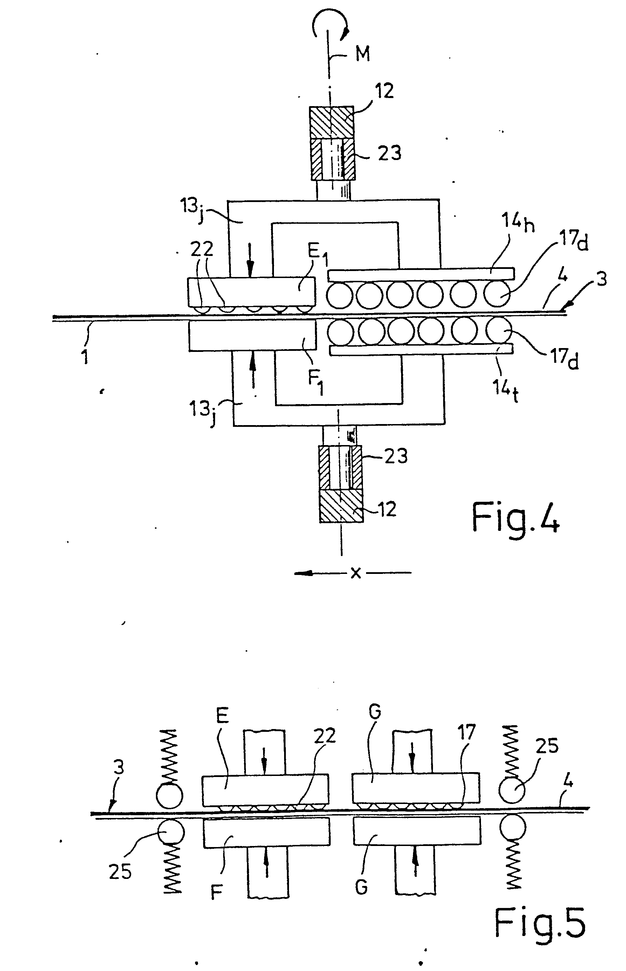

Eine andere Ausführungsform zeigt Fig. 3 mit an der Elektrode
$E_1$ -- grundrißlich versetzt -- vorgesehenen Elektrodenrollen
22, die in Fig. 4 im Seitenriß erkennbar sind. Diese Elektro-

de $E_1$ bzw. ihr Jochbalken $13_j$ ist gemäß Fig. 4 mit einem Hubstempel 23 verbunden, der sie gegen die -- nicht erkennbaren -- Elektrodenrollen der Gegenelektrode $F_1$ oder gegen den als Gegenelektrode dienenden Tisch 1 drückt.

Am Jochbalken $13_j$ sitzt auch noch ein Druckbalken $14_h$ bzw. $14_t$ mit Druckrollen $17_d$. Die Jochbalken $13_j$ sind um die Stempelachse M drehbar, um beim Wechsel der Fahrrichtung x die Positionen von Elektroden $E_1$ bzw. $F_1$ und Temperaturbalken $14_h$ bzw. $14_t$ vertauschen zu helfen.

Gemäß Fig. 5 sind beidseits eines Elektrodenpaares E, F und eines vor- bzw. nachgeschalteten Vorwärm- bzw. Kühlbalkenpaares G federnd gelagerte Druckrollen 25 angeordnet.

Dank der Ausbildung der Elektroden E, F und der Temperaturbalken 14 mit umlaufenden Druckbändern 20 oder Rollen 17, 22 ist es möglich, die Gewebebahnen $3_a$ und $3_b$ an ihrer Stoßlinie 4 entlang kontinuierlich zu schweißen; eines diskontinuierlichen Abhebens und Wiederaufsetzens von Elektroden E, F zum hochfrequenten Verschweißen bedarf es nicht mehr; störende Absätze an der Schweißnaht werden somit vermieden und die Einsatzzeiten stark verkürzt.

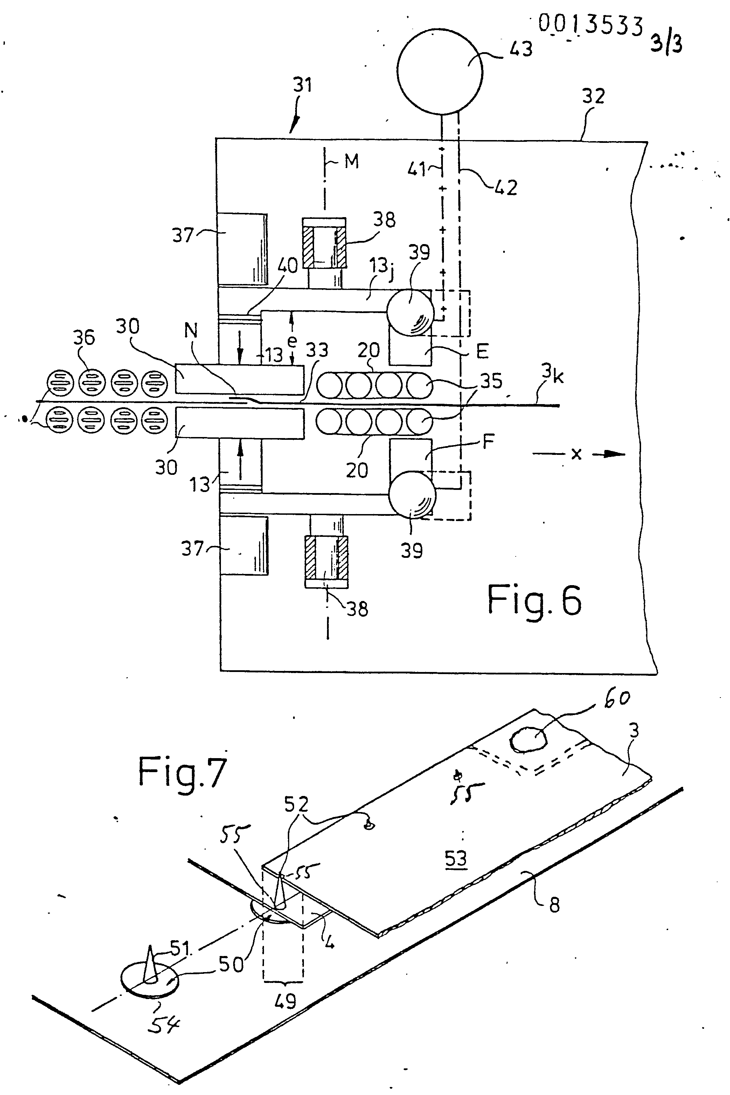

Die Schweißpresse 31 nach Fig. 6 weist in einem Gehäuse 32 einen Durchlaufschlitz 33 für Kunststoffbahnen $3_k$ auf, beispielsweise für mit Teflon beschichtete Glasbahnen. Die für den Arbeitsablauf erforderliche Fahrbühne für die Kunststoffbahnen $3_k$ ist in Fig. 6 übersichtlichkeitshalber vernachlässigt.

Beidseits des Durchlaufschlitzes 33 sind heizbare Druckplatten oder Heizbalken 30 angebracht, welche mittels Tragarmen 13 an Jochbalken 13j befestigt sind. Beidseits der
Druckplatten 30 sind äußere bzw. innere Walzenpaare 34
bzw. 35 mit integrierten Temperaturelementen 36 angeordnet, welche die Kunststoffbahnen $3_k$ synchron zum eigentlichen Schweißvorgang vorwärmen bzw. nachkühlen. Gleichzeitig sollen diese Walzenpaare 34, 35 auf die Kunststoffbahnen $3_k$ einen kontinuierlichen Druck ausüben, um eine
für die Kontaktwärme-Schweißung wünschenswerte Pressung
zu erreichen und die zu schweißenden Kunststoffbahnen $3_k$
in die bzw. aus der Schweißpresse 31 zu führen. Die Temperaturelemente 36 beispielsweise Kühlschlangen, führen
ein Kühlmedium -- Luft, Wasser od. dgl. -- oder ein Heizmedium über die Kunststoffbahnen $3_k$.

Erreicht eine Naht N -- in Fig. 6 als Quernaht dargestellt,
üblicherweise jedoch als Längsnaht in Zugrichtung x verlaufend -- den Durchlaufschlitz 33, führen Druckstempel
37 jene Druckplatten oder Heizbalken 30 unter Verringerung ihres Abstandes zusammen. Letzterer ist in der Zeichnung überhöht dargestellt und kann bis auf 0,05 mm vermindert werden.

Die Kunststoffbahnen $3_k$ werden durch Kontaktwärme von beispielsweise $350^{\circ}$ bis $500^{\circ}$ C unter hohem Druck (z. B. etwa
1500 N) verschweißt sowie anschließend zwischen den inneren Druckwalzen 35 nachgekühlt. Hierbei sind die Walzen
auf einer Seite der Bewegungsbahn für die Kunststoffbahn
$3_k$ vom Druckband 20 umfangen.

Die Jochbalken oder -arme 13j sind hier in Lagern 38 drehbar. An dem jenen Tragarmen 5 fernen Ende der Jocharme 13j
sind die Elektroden E, F mittels jeweils eines Drehgelenkes 39 angebracht und außer Gebrauch in die in Fig. 6 gestrichelt dargestellte Lage klappbar. Will man nun statt
der Teflon-Glas-Bahn $3_k$ oder einer Plane aus entsprechendem Werkstoff andere Kunststoffbahnen verschweißen, werden die Jocharme 13j um die Achse M gedreht und gleichzeitig die Druckplatten 36 -- unter Verringerung des Abstandes e -- an ihren Jocharm 13 j herangezogen. Hierzu dient
eine bei 40 dargestellte Hubvorrichtung am Tragarm 13.

Liegen die Elektroden E, F im Bereich des Durchlaufschlitzes 33, schwenkt man sie in ihre Gebrauchslage, welche
ebenfalls aus Fig. 6 ersichtlich, jedoch oberhalb der inneren Walzenpaare 35  dargestellt, ist.

Die Anschlüsse 41, 42 für einen Generator 43 sind nur symbolisch angedeutet, Röhrenbestückung, Oszillator, Gleichrichter, Schalter u. dgl. vernachlässigt.

Der Vorrichtung nach Fig. 1 kann ein dort nicht gezeigter
Apparat vorgeschaltet sein, welcher Schweißknöpfe oder
Schweißstifte 50 aus PVC -- gemäß Fig. 7 wie Kragenknöpfe
ausgebildet -- enthält; diese werden mit ihrem nadelförmigen Hals 51 durch die einander überlappenden Randbereiche
(49 in Fig. 7) der Gewebebahnen 3 gestoßen und die Halsenden 52 mit der PVC-Schicht 53  der oberen Gewebebahn 3 verschweißt.

Die aufeinanderliegenden Gewebebahnen 3 werden so von den "Kragenknopf"-Hälsen 51 bereits vor dem Schweißvorgang
gegen ein Verschieben gesichert und bilden einen Scherwiderstand im Überlappungsbereich 49.

Die beim Einpressen der Schweißknöpfe oder Schweißstifte
50 in den Gewebebahnen 3 entstehenden Durchsetzungsdurchbrüche 55 werden einerseits vom plattenartigen Stiftkopf
54 abgedeckt, andererseits von einem beim Schweißvorgang
an dem PVC-Halsende 52 entstehenden Schweißsiegel, wie es
in Fig. 7 bis 60 angedeutet ist. Hierdurch ist der aus den
zwei Gewebebahnen erzeugte Gewebestreifen trotz jener Durch
setzungsdurchbrüche 55 völlig dicht.

P A T E N T A N S P R Ü C H E

1. Vorrichtung zum hochfrequenten Verschweißen von Werkstoffbahnen zwischen zwei Elektroden, welche beidseits
der Werkstoffbahnen anzuordnen sind, insbesondere an
einem die Werkstoffbahnen tragenden Tisch verfahrbare
Schweißvorrichtung,

dadurch gekennzeichnet,

daß wenigstens eine der Elektroden (E, E1 bzw. F, F1)
an der von den durch Gewebebahnen (3) gebildeten Werkstoffbahn erzeugten Ebene abwälzbare Teile (20, 22)
aufweist.

2. Vorrichtung zum hochfrequenten Verschweißen von Werkstoffbahnen zwischen zwei Elektroden, welche beidseits
der Werkstoffbahnen anzuordnen sind, insbesondere an
einem die Werkstoffbahnen tragenden Tisch verfahrbare
Schweißvorrichtung, dadurch gekennzeichnet, daß die
Elektroden (E, F) mit wenigstens einem beidseits der
Bewegungsbahn der von Kunststoffbahnen gebildeten Werkstoffbahnen und zu diesen etwa parallel angebrachten
Heizbalkenpaar od. dgl., dessen Heizbalken unter Druck
gegeneinander führbar gelagert sind, austauschbar angeordnet sind und die Schweißpresse (31) ein Gehäuse (32)
mit einem Durchlaufschlitz (33) für die Kunststoffbahnen $(3_k)$ aufweist.

3. Vorrichtung nach Anspruch 2, dadurch gekennzeichnet, daß die Elektroden (E, F) mit ihren Generatoranschlüssen (41, 42) in der Schweißpresse (31) bewegbar angebracht sind.

4. Vorrichtung nach einem der Ansprüche 1 bis 3, dadurch gekennzeichnet, daß die Heizbalken (30) und die Elektroden (E, F) um eine Achse (M) drehbar angebracht sind, gegebenenfalls an einem drehbar gelagerten Jochbalken (13) od. dgl. angebracht und gegenüber diesem schwenkbar und/oder anhebbar bzw. senkbar sind.

5. Vorrichtung nach Anspruch 1, dadurch gekennzeichnet, daß die abwälzbaren Teile (20, 22) auf die Gewebebahn/en (3) aufsetzbar und durch Kraftspeicher an sie andrückbar ausgebildet sowie gegebenenfalls mit einem Antrieb verbunden sind.

6. Vorrichtung nach einem der Ansprüche 1 bis 5, dadurch gekennzeichnet, daß die Elektrode (E1 bzw. F1) Rollen oder Walzen (22) aufweist oder aus ihnen besteht.

7. Vorrichtung nach Anspruch 6, dadurch gekennzeichnet, daß an der Elektrode (E1 bzw. F1) quer zur Schweißrichtung (x) mehrere Reihen zueinander versetzt angeordneter Rollen oder Walzen (22) vorgesehen sind.

8. Vorrichtung nach einem der Ansprüche 1 bis 7, dadurch gekennzeichnet, daß die Elektrode (E bzw. F) wenigstens ein panzerkettenartiges Druckband (20) od. dgl. aufweist.

9. Vorrichtung nach wenigstens einem der Ansprüche 1 bis 8, dadurch gekennzeichnet, daß der Elektrode (E, E1 bzw. F, F2) bzw. dem Schweißbereich (33) wenigstens ein Heizorgan (G) bzw. ein Kühlorgan (14) als Kühlstrecke vor- bzw. nachgeschaltet und mit auf die Werkstoffbahn/en (3) aufsetzbaren Rollen (17) und/oder umlaufenden Druckbändern versehen ist, wobei gegebenenfalls die Kühlstrecke Walzen- oder Rollenpaare (34 bzw. 35) aufweist, welche von Kühlmittel durchströmt und gegen die Werkstoffbahnen (3) führbar ausgebildet sind.

10. Vorrichtung nach wenigstens einem der Ansprüche 1 bis 9, dadurch gekennzeichnet, daß der Elektrode (E1 bzw. F1) und/oder dem Heiz- oder Kühlorgan (G, 14, 34, 35) wenigstens eine federnde Druckrolle (25) zugeordnet ist.

11. Vorrichtung nach einem der Ansprüche 2 bis 10, dadurch gekennzeichnet, daß die Heizbalken (30) und die Kühlstrecke/n (14, 34, 35) synchron fahrbar gesteuert sind.

12. Vorrichtung nach wenigstens einem der Ansprüche 1 bis 11, dadurch gekennzeichnet, daß der Tisch (1) Spannorgane (6) zum Festlegen der Gewebebahn/en (3) auf der Tischoberfläche (8) aufweist und diese Halterungen (2, 5) in oder gegen Schweißrichtung (x) und/oder quer dazu (y) ortsveränderlich sind, daß gegebenenfalls als Halteorgan am Tisch in Längsrichtung (z) wenigstens ein verstellbarer Querbalken (2) sowie auf diesem verfahrbare Schlitten (5) dienen, wobei Querbalken und/oder Schlitten mit von der Schweißvorrichtung aus steuerbaren Antrieben versehen sind.

13. Vorrichtung nach wenigstens einem der Ansprüche 1
bis 12, gekennzeichnet.durch eine dem Preß- bzw.
Schweißbereich so vorgeordnete Einrichtung zum Einbringen von Schweißstiften (50) in die Gewebebahnen
(3), daß die Schweißstifte wenigstens zwei einander
überlappende Gewebebahnen zusammen durchsetzen und
am Ende des Schweißbereichs (33) beidseits der miteinander verschweißten Gewebebahnen mindestens eine
den entstandenen Durchsetzungsdurchbruch (55) abdeckende Schutzschicht bilden, wobei die Schutzschicht/
en jeder Bahnseite oder -oberfläche durch einen stiftartigen Hals (51) mit wenigstens einer Schutzschicht
der anderen Bahnseite verbunden sind.

14. Vorrichtung nach Anspruch 13, dadurch gekennzeichnet,
daß die Schweißstifte (50) jeweils aus einem Widerlager, z. B. einem plattenartigen Kopf (54), und wenigstens einem Hals (51) bestehen, welcher mit einem
spitzen Ende (52) durch die Gewebebahn/en (3) drückbar ist.

15. Vorrichtung nach Anspruch 13 oder 14, dadurch gekennzeichnet, daß sowohl der/die Schweißstift/e (50) als
auch zumindest die im Überlappungsbereich außen liegende Bahnoberfläche (53) aus miteinander verschweißbaren Werkstoffen bestehen, gegebenenfalls beide Teile (50, 53) aus Polyvinylchlorid.

16. Verfahren zum Verschweißen von wenigstens zwei zumindest teilweise einander überlagernden Werkstoff-
oder Gewebebahnen, dadurch gekennzeichnet, daß die
Gewebebahnen (3) vor dem Schweißvorgang in ihrem Überlappungsbereich mit sie gemeinsam durchsetzenden
Schweißstiften od. dgl. versehen und während des
Schweißvorganges aus den Gewebebahnen ragende Teile
der Schweißstifte thermisch so verformt werden, daß
der jeweilige Durchsetzungsdurchbruch dichtend abgedeckt wird.

17. Verfahren zum Verschweißen von Gewebebahnen nach Anspruch 16, von denen wenigstens eine mit einer äußeren Kunststoffschicht, insbesondere Polyvinylchlorid, versehen ist, dadurch gekennzeichnet, daß zumindest der Hals (51) des Schweißstifts (50) aus dem
Werkstoff der Kunststoffschicht (53) gefertigt und
sein Ende (52) während des Schweißvorgangs zu einer
Deckschicht (60) verformt und mit der Kunststoffschicht der Gewebebahn verschweißt, gegebenenfalls
mit fluchtenden Oberflächen verschweißt, wird.

Fig.1

Fig.3

Fig.2

Fig.4

Fig.5

0013533 3/3

Fig. 6

Fig.7